# EUROPEAN PATENT APPLICATION

(11) **EP 4 715 890 A1**
(43) Date of publication of application: **25.03.2026**
(21) Application number: 24823662.2
(22) Date of filing: 11.06.2024
(51) Int. Cl.: H01M 4/134, H01M 4/04, H01M 10/44, H01M 10/052, C01B 33/113

(54) **ELECTRODE FOR LITHIUM METAL BATTERY AND LITHIUM METAL BATTERY COMPRISING SAME**

(30) Priority: 14.06.2023 KR 20230076216
(71) Applicant: SK On Co., Ltd., Seoul 03161 (KR)
(72) Inventor: LEE, Jae Woo, Daejeon 34124 (KR); CHOI, Bit Na, Daejeon 34124 (KR)
(74) Representative: Prüfer & Partner mbB Patentanwälte · Rechtsanwälte
(86) International application number: PCT/KR2024/007950
(87) International publication number: WO 2024/258144

(57) **Abstract**

An electrode for a lithium metal battery according to embodiments of the present disclosure includes a lithium metal storage layer including silicon oxide particles. The silicon oxide particles have a porous structure, and the molar ratio of oxygen to silicon in the silicon oxide particles is 1.5 or more and less than 2.0. A lithium metal battery according to embodiments of the present disclosure includes the electrode for a lithium metal battery according to the above-described embodiments.

## Description

### [Technical Field]

The present disclosure relates to an electrode for a lithium metal battery and a lithium metal battery including the same.

### [Background Art]

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles such as hybrid vehicles.

Examples of secondary batteries may include a lithium secondary battery, a nickelcadmium battery, and a nickel-hydrogen battery. Among these, lithium secondary batteries are actively being researched and developed due to their high operating voltage, high energy density per unit weight, and advantages in charging speed and weight reduction.

Graphite and silicon are mainly used as anode materials for lithium metal batteries. However, since graphite and silicon have high reaction potentials and low capacities, there are limits to their ability to increase the energy density and capacity of lithium secondary batteries. Using lithium metal, which has low potential and high capacity, as an anode material may improve energy density.

However, when lithium metal is used as an anode material, lithium may grow unevenly on the surface of the lithium metal during charging, thereby forming lithium dendrites. This may lead to a short circuit, overheating, and explosion of the electrode. In addition, the electrode volume may repeatedly expand and contract during the deposition and stripping of lithium on the lithium metal surface, potentially reducing the stability of the lithium secondary battery.

### [Summary of Invention]

### [Problems to be Solved by Invention]

An object of the present disclosure is to provide an electrode for a lithium metal battery with improved capacity and stability.

Another object of the present disclosure is to provide a lithium metal battery with improved capacity and stability.

### [Means for Solving Problems]

An electrode for a lithium metal battery including a lithium metal storage layer according to exemplary embodiments of the present disclosure includes silicon oxide particles having a porous structure. The molar ratio of oxygen to silicon in the silicon oxide particles is 1.5 or more and less than 2.0.

In some embodiments, the silicon oxide particles may be SiOₓ, and 1.5≤x<2.

In some embodiments, the porosity of each of the silicon oxide particles may be 10% to 90%.

In some embodiments, the porosity of the lithium metal storage layer may be 40% to 95%.

In some embodiments, pores formed within the silicon oxide particles may have a size of 10 nm to 1 µm.

In some embodiments, pores formed within the lithium metal storage layer may have a size of 10 nm to 10 µm.

In some embodiments, the maximum voltage of the lithium metal storage layer measured during a charge process after initial charge and discharge (formation) may be 0 V or less relative to the redox voltage of lithium.

In some embodiments, the electrode for a lithium metal battery may further include an electrode current collector. The lithium metal storage layer is disposed on at least one surface of the electrode current collector.

In some embodiments, the silicon oxide particles may include lithium silicate (Li_{y}SiOₓ, 0<y, 1.5≤x<2).

In some embodiments, at a SOC of 100%, the molar ratio of lithium present as lithium silicate within the lithium metal storage layer to lithium deposited as lithium metal within the lithium metal storage layer is 0.9 or more.

In some embodiments, the molar ratio of lithium included in the lithium metal storage layer at a SOC of 0% to lithium included in the lithium metal storage layer at a SOC of 100% may be 2.2 or less.

A lithium metal battery according to exemplary embodiments of the present disclosure includes the above-described electrode for a lithium metal battery.

In a method for manufacturing silicon oxide particles for a lithium metal battery according to exemplary embodiments of the present disclosure includes, a mixture is formed by mixing a silicon precursor having a porous structure with an alkaline earth metal or a carbon compound. The mixture is heat-treated, and the heat-treated mixture is washed to obtain silicon oxide particles. The molar ratio of oxygen to silicon in the silicon oxide particles is 1.5 or more and less than 2.0.

In some embodiments, the method for manufacturing silicon oxide particles for a lithium metal battery may further include mixing the heat-treated mixture with an acid prior to washing the heat-treated mixture.

In some embodiments, the silicon precursor may be SiO₂.

In some embodiments, the alkaline earth metal may be magnesium (Mg).

### [Advantageous effects]

The electrode for a lithium metal battery may include a lithium metal storage layer including silicon oxide particles, and the molar ratio of oxygen to silicon in the silicon oxide particles may be 1.5 or more and less than 2.0. Therefore, lithium metal may be deposited and dealloyed within the silicon oxide particles.

The silicon oxide particles may have a porous structure. As the reaction area of the lithium metal increases, the current density may be distributed during charging, thereby suppressing the growth of lithium dendrites. Consequently, the electrical characteristics and stability of the lithium metal battery may be improved.

The porosity of the lithium metal storage layer may be controlled within a predetermined range. Therefore, lithium metal nuclei may be uniformly formed within the lithium metal storage layer, and the volume changes in the lithium metal storage layer may be reduced due to the stable deposition of lithium metal.

Lithium metal batteries according to embodiments of the present disclosure may be widely applied in green technology fields, such as electric vehicles, battery charging stations, as well as solar power generation, wind power generation, and the like, which use the batteries. In addition, the lithium metal battery according to the embodiments of the present disclosure may be used in eco-friendly electric vehicles, hybrid vehicles, and the like, which are aimed at mitigating climate change by reducing air pollution and greenhouse gas emissions.

### [Brief Description of Drawings]

FIG. 1 is a schematic cross-sectional view illustrating an electrode for a lithium metal battery according to exemplary embodiments.
FIG. 2 is a schematic cross-sectional view illustrating an electrode for a lithium metal battery according to exemplary embodiments.
FIG. 3 is a schematic flowchart for describing processes of a method for manufacturing an electrode structure according to exemplary embodiments.
FIGS. 4 and 5 are schematic plan and cross-sectional views, respectively, illustrating a lithium metal battery according to exemplary embodiments.
FIGS. 6 and 7 are SEM images of a silicon precursor and silicon oxide particles, respectively.
FIG. 8 is a graph illustrating the voltage of an electrode for a lithium metal battery according to exemplary embodiments relative to the redox voltage of lithium.
FIG. 9 is a graph illustrating the voltage of an electrode including SiO relative to the redox voltage of lithium.

### [Mode for Carrying out Invention]

According to embodiments of the present disclosure, an electrode for a lithium metal battery including silicon oxide particles having a porous structure is provided. In addition, according to embodiments of the present disclosure, a lithium metal battery including the above-described electrode for a lithium metal battery is provided.

Further, according to embodiments of the present disclosure, a method for manufacturing the above-described silicon oxide particles is provided.

Hereinafter, unless otherwise defined in the present specification, when a portion such as a layer, film, thin film, region, or plate is described as being "on" or "above" another portion, it may refer not only to a case where the portion is directly on the other portion, but also to a case where another portion is interposed therebetween.

Hereinafter, the embodiments of the present disclosure will be described in more detail with reference to the accompanying drawings. However, the drawings attached to the present disclosure are merely illustrative of some embodiments of the present disclosure to aid in understanding the technical spirit of the invention together with the foregoing description. Therefore, the present disclosure should not be construed as being limited to the matters illustrated in the drawings.

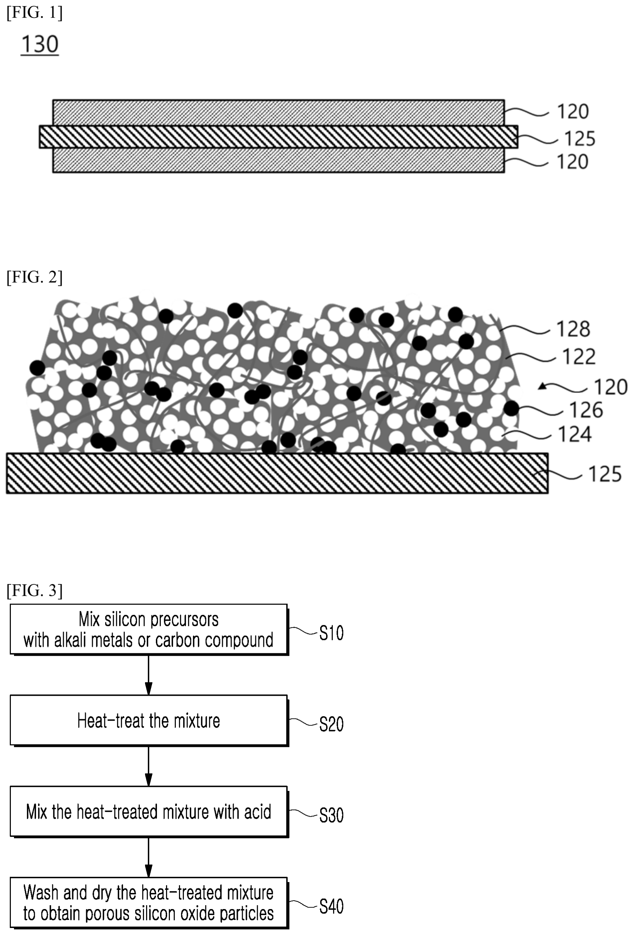

FIGS. 1 and 2 are schematic cross-sectional views respectively illustrating an electrode for a lithium metal battery according to each exemplary embodiment.

Referring to FIGS. 1 and 2, the electrode for a lithium metal battery (hereinafter, also abbreviated as "electrode") may include a lithium metal storage layer.

A lithium metal storage layer 120 may include silicon oxide particles 122. The molar ratio of oxygen to silicon in the silicon oxide particles 122 may be 1.5 or more and less than 2.0. Accordingly, lithium metal deposition and stripping reactions may occur on the surface of the silicon oxide particles 122.

For example, if the molar ratio of oxygen to silicon in the silicon oxide particles 122 is less than 1.5 or 2.0, lithium ions may be alloyed and dealloyed within the silicon oxide particles 122 due to a reversible alloying reaction between the silicon oxide and lithium ions. Therefore, the oxidation and reduction reactions of silicon oxide by lithium ions may occur during charging and discharging as the primary reversible reaction related to the capacity of the lithium secondary battery.

According to exemplary embodiments, the silicon oxide particles 122 include SiOₓ, wherein x may be in the range of 1.5≤x<2. Therefore, the anode reaction may occur substantially through lithium metal deposition and stripping during charging and discharging, rather than the oxidation and reduction reactions of the silicon oxide particles 122. Therefore, lithium metal deposition and stripping may serve as the primary reversible reaction related to the capacity of the lithium secondary battery.

The lithium metal storage layer 120 may include the above-described silicon oxide particles 122, allowing lithium metal to grow within the lithium metal storage layer 120. Lithium metal has a low reaction potential and high capacity, which may improve the output characteristics and energy density of the lithium metal battery.

In one embodiment, a lithium metal battery including an electrode 130 for a lithium metal battery may have a substantially anode-free structure.

In one embodiment, during the manufacture of a lithium metal battery, lithium metal may be first deposited within the lithium metal storage layer 120. Accordingly, the electrode 130 for a lithium metal battery may be used as the anode of the lithium metal battery.

According to exemplary embodiments, a charge potential (vs. Li/Li⁺) of the electrode 130 for a lithium metal battery relative to lithium may be 0 V or less. For example, the maximum charge voltage of the lithium metal storage layer 120 measured after initial charge and discharge (formation) may be 0 V or less relative to the redox voltage of lithium.

As the electrode 130 for a lithium metal battery has a lower potential relative to lithium metal, the capacity of the lithium metal battery may be expressed through lithium metal deposition and stripping. In addition, lithium metal may have a low standard reduction potential, thereby providing high battery potential and energy density. Therefore, the lithium metal storage layer 120 may have a low redox potential, thereby further improving the capacity and charge and discharge efficiency of the lithium metal battery.

According to exemplary embodiments, the silicon oxide particles 122 may have a porous structure. For example, the silicon oxide particles 122 may include a plurality of pores 124 on the surface and/or inside thereof.

Lithium metal nuclei may be formed within the silicon oxide particles 122, or within the pores 124 formed between the silicon oxide particles 122. Consequently, lithium metal may be uniformly grown and deposited within the lithium metal storage layer 120.

For example, if the current density is unevenly distributed on the surface of the lithium metal storage layer 120, the growth and deposition of lithium metal may be concentrated in localized regions, such as regions where the current is concentrated. In this case, overvoltage in these regions may cause lithium dendrites or lithium ion crystals to grow.

Lithium dendrites have low conductivity and may easily lose electrical contact. Accordingly, lithium dendrites may be stripped from the electrode, generating inactive lithium. This may reduce the capacity of the lithium metal battery, and lower energy density and charge and discharge efficiency.

In addition, if lithium dendrites grow concentratedly in some regions, volume changes, such as expansion of the electrode, may increase. Excessively grown lithium dendrites may cause contact between the electrode 130 for a lithium metal battery and the cathode, resulting in an internal short circuit and increased side reactions with the electrolyte.

However, according to exemplary embodiments, the silicon oxide particles 122 may have a porous structure. Accordingly, current may be uniformly distributed within the lithium metal storage layer 120 through the pores 124, thereby suppressing local current concentration. Therefore, the uniform current density may allow lithium metal to be uniformly deposited and grown within the lithium metal storage layer 120, thereby suppressing the growth of lithium dendrites.

In addition, by using the lithium metal storage layer 120 including silicon oxide particles 122, rather than a metal current collector composed of Cu, Ni, or Al as a base structure for lithium metal growth, the stability and cycle life characteristics of the lithium metal battery may be improved.

For example, the voltage required for lithium to be precipitated on the surface of a metal current collector may be higher than the voltage required for additional lithium to be deposited on the lithium metal. Therefore, lithium metal deposition may be concentrated on regions of the metal current collector where lithium metal nuclei are first formed, thereby forming lithium dendrites.

Since the silicon oxide particles 122 according to exemplary embodiments have the above-described silicon and oxygen composition ratio, the voltage required for lithium to be precipitated on the surface of the silicon oxide particles 122 may be substantially the same as or similar to the voltage required for additional lithium to be deposited on the lithium metal.

Therefore, even if lithium metal nuclei are first formed on some regions of the surface of the silicon oxide particles 122, additional lithium metal nuclei may be formed in other regions. Consequently, lithium metal may be uniformly deposited and grown on the surface of the silicon oxide particles 122.

According to exemplary embodiments, the porosity of each silicon oxide particle 122 may be 10% to 90%. The porosity of the silicon oxide particles 122 may be defined as the percentage obtained by dividing the volume of pores within the silicon oxide particles 122 by the total volume of the silicon oxide particles 122.

For example, if the porosity of the silicon oxide particle 122 is less than 10%, the surface area of the silicon oxide particles 122 may decrease, resulting in a decrease in the storage space of lithium metal on the surface of the silicon oxide particles 122 or inside the lithium metal storage layer 120. Consequently, the reversible capacity due to lithium metal deposition and stripping may decrease.

For example, if the porosity of the silicon oxide particle 122 is less than 90%, the structural stability of the silicon oxide particle 122 may decrease. In addition, as the reaction area becomes excessively large, side reactions between the lithium metal deposited and grown within the silicon oxide particles 122 and the electrolyte may increase.

In some embodiments, the porosity of each silicon oxide particle 122 may be 20% to 90%, 30% to 85%, or 50% to 85%. Within these ranges, the growth of lithium dendrites is further suppressed, and the cycle life characteristics and capacity of the lithium metal battery may be further improved.

In one embodiment, the porosity of the silicon oxide particles 122 may be measured by the mercury intrusion porosimetry (MIP) or the Brunauer-Emmett-Teller (BET) method. In one embodiment, the porosity of the silicon oxide particles 122 may be measured using a true density method. For example, the density and weight of the silicon oxide particles 122 may be measured, and the porosity may be obtained by comparing the volume calculated from the density and weight with the actual volume measured for the silicon oxide particles 122.

In one embodiment, the pores 124 formed within the silicon oxide particles 122 may have a size of 10 nm to 1 µm. The size of the pores 124 may refer to the longest diameter of the pores 124.

Within the above range, lithium metal may be sufficiently deposited and grown within the pores 124 of the silicon oxide particles 122, and the structural stability of the silicon oxide particles 122 may be further improved. Accordingly, the cycle life characteristics and capacity of the lithium metal battery may be further improved.

According to exemplary embodiments, the porosity of the lithium metal storage layer 120 may be 40% to 95%. The porosity of the lithium metal storage layer 120 may be the percentage obtained by dividing the total volume of all pores included within the lithium metal storage layer 120 by the total volume of the lithium metal storage layer 120.

The pores of the lithium metal storage layer 120 may originate from the pores 124 of the silicon oxide particles 122, and may also originate from pores formed between the silicon oxide particles 122, or pores formed between the silicon oxide particles 122 and a binder or conductive material.

When the porosity of the lithium metal storage layer 120 is within the above range, lithium metal may be more uniformly deposited and stripped within the lithium metal storage layer 120. Accordingly, volume changes in the lithium metal storage layer 120 during charging and discharging may be suppressed. In addition, even if lithium dendrites grow in localized regions of the lithium metal storage layer 120, the volume increase caused by the lithium dendrites may be accommodated or mitigated by the pores included in the lithium metal storage layer 120.

In some embodiments, the porosity of the lithium metal storage layer 120 may be 50% to 95%, 60% to 90%, or 70% to 90%. Within these ranges, lithium metal may stably be deposited and stripped within the pores, thereby further improving the stability, ionic conductivity, and energy density of the electrode 130 for a lithium metal battery.

In one embodiment, the porosity of the lithium metal storage layer 120 may be measured or calculated using mercury intrusion porosimetry, the BET method, or a true density method.

In some embodiments, the pores formed within the lithium metal storage layer 120 may have a size of 10 nm to 10 µm. Within this range, sufficient space for lithium metal deposition within the lithium metal storage layer 120 may be secured, thereby further improving the charge and discharge capacities and energy density of the lithium metal battery.

According to exemplary embodiments, the silicon oxide particles 122 may include lithium silicate. For example, at least a portion of the surface of the silicon oxide particles 122 may be oxidized to lithium silicate (Li_{y}SiOₓ) through an initial formation process.

Therefore, lithium metal may be deposited and stripped on the lithium silicate during charging and discharging. For example, the surface of the silicon oxide particles 122 may have an overall low potential due to the lithium silicate on the surface of the silicon oxide particles 122, and lithium metal may be uniformly deposited and grown on the surface of the silicon oxide particles 122.

In some embodiments, at a state of charge (SOC) of 100%, the ratio (M2_{Li}/M1_{Li}) of the lithium content (M2_{Li}) present as lithium silicate in the lithium metal storage layer 120 to the lithium content (M1_{Li}) of the lithium metal deposited within the lithium metal storage layer 120 may be 0.9 or more, based on the molar amount.

For example, the molar ratio (M2_{Li}/M1_{Li}) may be the molar ratio of lithium converted to lithium silicate during the initial formation process to lithium newly deposited as lithium metal within the lithium metal storage layer 120 during the second charge.

Within the above range, lithium metal may be uniformly formed on the lithium silicate, allowing for more stable deposition of lithium metal within the lithium metal storage layer 120. For example, when the molar ratio of lithium included in the lithium silicate to the molar ratio of the lithium metal deposited is less than 0.9, additional oxidation and reduction reactions may occur between lithium ions and the silicon oxide particles 122. In addition, excessive lithium ion crystals may form on the surface of silicon oxide particles 122, which may cause an internal short circuit.

For example, the molar ratio (M2_{Li}/M1_{Li}) may be 0.9 to 2.0, 0.9 to 1.6, or 0.9 to 1.5.

In some embodiments, the molar ratio ((M2_{Li}+M1_{Li})/ M2_{Li}), which is the ratio of the lithium (M2_{Li}+M1_{Li}) included in the lithium metal storage layer 120 at a SOC of 100% to the lithium (M2_{Li}) included in the lithium metal storage layer 120 at a SOC of 0%, may be 2.2 or less.

Within the above range, the lithium metal storage layer 120 may have a low potential, while the electrochemical stability of the electrode 130 for a lithium metal battery may be further improved and the growth of lithium dendrites may be further suppressed.

In some embodiments, the lithium metal storage layer 120 may further include a binder 128 and a conductive material 126.

For example, binder 128 may include an organic binder such as vinylidene fluoride-hexafluoropropylene copolymer (PVDF-co-HFP), polyvinylidene fluoride (PVDF), polyacrylonitrile, polymethylmethacrylate, or an aqueous binder such as styrene-butadiene rubber (SBR).

A conductive material 126 may be included to facilitate electron migration. For example, the conductive material may include carbon-based conductive materials such as graphite, carbon black, graphene, carbon nanotubes, and/or metal-based conductive materials, including perovskite materials, such as tin, tin oxide, titanium oxide, LaSrCoO₃, and LaSrMnO₃.

According to exemplary embodiments, the electrode 130 for a lithium metal battery may further include an electrode current collector 125. The lithium metal storage layer 120 may be disposed on at least one surface of the electrode current collector 125.

The electrode current collector 125 may include gold, stainless steel, nickel, aluminum, iron, titanium, copper, or an alloy thereof, and for example, may include copper or a copper alloy.

FIG. 3 is a schematic flowchart for describing processes of a method for manufacturing silicon oxide particles according to exemplary embodiments. Hereinafter, a method for manufacturing silicon oxide particles will be described with reference to FIG. 3.

Referring to FIG. 3, a silicon precursor may be mixed with an alkaline earth metal or carbon compound to form a mixture (e.g., step S10).

The silicon precursor may have a porous structure. For example, the porosity of the silicon oxide particles may be controlled by adjusting the porosity and pore size of the silicon precursor.

In some embodiments, the silicon precursor may include SiO₂. The silicon precursor may be reduced by reacting with an alkaline earth metal or carbon. Therefore, the oxygen and silicon composition ratio of the silicon oxide particles may be controlled as oxygen is removed from the crystal structure of the silicon precursor.

In some embodiments, magnesium, calcium, strontium, or barium may be used as the alkaline earth metal. For example, magnesium (Mg) may be used as the alkaline earth metal. Magnesium has appropriate reactivity with SiO₂, which may further improve processability and efficiency.

In some embodiments, the carbon compound may include carbon black such as Super-P or Super-C60, amorphous carbon compounds, carbon nanotubes, or graphene.

In one embodiment, the alkaline earth metal and carbon compound may be used in the form of powder. This increases the contact area with the silicon precursor, allowing the alkaline earth metal or carbon compound to react appropriately across the entire surface of the silicon precursor.

In some embodiments, the ratio of the silicon precursor content to the content of the alkaline earth metal or the carbon compound in the mixture may be 4 times or more, 5 times or more, 7 times or more, and 12 times or less, 11 times or less, or 10 times or less, based on weight.

The mixture may be heat-treated (e.g., step S20). Through the heat treatment process, the silicon precursor may be reduced to remove oxygen.

In some embodiments, the heat treatment may be performed under an inert atmosphere, such as a nitrogen or argon atmosphere.

In some embodiments, the heat treatment temperature may be 500°C to 1,000°C. Within this range, the silicon precursor may be appropriately reduced while preventing melting. In one embodiment, the heat treatment time may be 30 minutes to 4 hours.

The amount of reduction of the silicon precursor may be controlled by adjusting the content of the alkaline earth metal and carbon compound, the powder size, the heat treatment temperature, and the heat treatment time.

In one embodiment, the heat-treated mixture may be mixed with an acid (e.g., step S30).

By means of the acid, side reaction products or by-products such as metal oxides (e.g., MgO) formed on the silicon oxide particles may be more easily removed.

In some embodiments, the acid may include acetic acid (CH₃COOH), hydrochloric acid (HCl), sulfuric acid (H₂SO₄), phosphoric acid (H₃PO₄), or nitric acid (HNO₃).

The heat-treated mixture may be washed and dried to obtain silicon oxide particles (e.g., step S40).

Washing may be performed using water or an alcohol-based solvent. In some embodiments, when the heat-treated mixture is mixed with an acid, washing may be performed until the mixture becomes neutral.

The drying process may be performed at a temperature of 20°C to 100°C. In one embodiment, the drying process may be sequentially performed by a convection drying process and a vacuum drying process.

The silicon oxide particles described above may be obtained by the above-described manufacturing method. The molar ratio of oxygen to silicon in the silicon oxide particles may be 1.5 or more and less than 2.0.

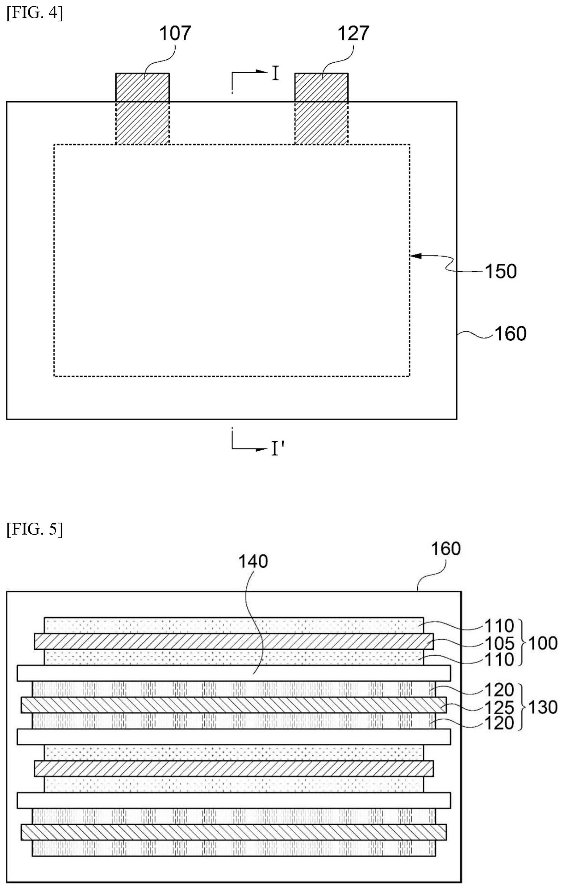

Hereinafter, a lithium metal battery including the above-described electrode for a lithium metal battery will be described with reference to FIGS. 4 and 5.

Referring to FIGS. 4 and 5, the lithium metal battery may include a cathode 100 and the electrode 130 for a lithium metal battery disposed opposite to the cathode 100.

In one embodiment, the cathode 100 may be a lithium metal electrode.

In one embodiment, the cathode 100 may include a cathode active material layer 110 formed by applying a cathode active material to a cathode current collector 105.

For example, a cathode slurry may be prepared by mixing a cathode active material with a cathode binder, a conductive material, and/or a dispersant in a solvent, followed by stirring the same. The cathode slurry may be coated on at least one surface of the cathode current collector 105, followed by drying and roll-pressing to fabricate the cathode 100.

The cathode current collector 105 may include stainless steel, nickel, aluminum, titanium, or an alloy thereof. The cathode current collector 105 may also include aluminum or stainless steel having a surface treated with carbon, nickel, titanium or silver.

Examples of the cathode active material may include one or more compounds selected from a lithium iron phosphate compound, a lithium cobalt-based oxide, a lithium manganese-based oxide, a lithium nickel-based oxide, and a lithium composite oxide.

For example, the cathode active material may include layered compounds such as a lithium cobalt oxide (LiCoO₂) or lithium nickel oxide (LiNiO₂); a lithium manganese oxide such as LiMnO₃, LiMn₂O₃, and LiMnO₂; a lithium copper oxide (Li₂CuO₂); a vanadium oxide such as LiV₃O₈, V₂O₅ and Cu₂VO₇; and a lithium iron phosphate oxide such as LiFePO₄.

In some embodiments, the cathode active material may include a compound represented by Formula 1 below.

[Formula 1] LiₐNi_{b}M_{1-b}O₂

In Formula 1, a and b may satisfy 0.95≤a≤1.08, and b≥0.5, and M may be at least one element selected from the group consisting of Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba and Sr.

In one embodiment, the cathode active material includes nickel (Ni) and may further include at least one of cobalt (Co) or manganese (Mn). For example, a nickel-cobalt-manganese (NCM)-based lithium oxide may be used as the cathode active material.

For example, nickel (Ni) may be provided as a metal associated with the capacity of the lithium secondary battery. The higher the content of nickel, the greater the improvement in capacity and output of the lithium secondary battery. However, if the content of nickel increases excessively, the cycle life of the lithium secondary battery may be reduced, and it may be disadvantageous in terms of mechanical and electrical stability.

In one embodiment, the conductivity or resistance of the cathode may be improved by cobalt (Co), as well as the mechanical and electrical stability of the cathode may be improved by manganese (Mn).

The chemical structure represented by Formula 1 indicates a bonding relationship between elements included in the lattice structure or the crystal structure of the cathode active material, and does not exclude other additional elements. For example, M may be provided as a main active element of the cathode active material. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the crystal structure. The auxiliary element may be incorporated into the crystal structure together to form bonds, and it should be understood that this case is also included within the chemical structure represented by Formula 1.

As the cathode binder and conductive material, materials which are substantially the same as or similar to the above-described materials may be used. For example, a PVDF-based binder may be used as the cathode binder. In this case, the amount of binder for forming the cathode active material layer 110 may be decreased and the amount of the cathode active material may be relatively increased. Accordingly, the output and capacity of the secondary battery may be improved.

In some embodiments, a separation membrane 140 may be interposed between the cathode 100 and the electrode 130 for a lithium metal battery. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane 140 may include a nonwoven fabric made of glass fibers having a high melting point, polyethylene terephthalate fibers, etc.

According to exemplary embodiments, an electrode cell is defined by the cathode 100, the electrode 130 for a lithium metal battery, and the separation membrane 140, and a plurality of electrode cells may be stacked to form, for example, a jelly roll type electrode assembly 150. For example, the electrode assembly 150 may be formed by winding, stacking, or folding the separation membrane 140.

The electrode assembly 150 may be accommodated in the case 160 together with an electrolyte to define the lithium secondary battery. According to exemplary embodiments, a non-aqueous electrolyte may be used as the electrolyte.

The non-aqueous electrolyte may include a lithium salt of an electrolyte and an organic solvent. The lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfuroxide, acetonitrile, dimethoxyethane, diethoxyethane, vinylene carbonate, sulfolane, gamma-butyrolactone, propylene sulfite and tetrahydrofuran, etc. may be used. These may be used alone or in combination of two or more thereof.

In some embodiments, a solid electrolyte layer may be interposed between the cathode 100 and the electrode 130 for a lithium metal battery. The solid electrolyte layer may include a sulfide-based electrolyte, an oxide-based electrolyte, or a polymer electrolyte.

In this case, the lithium metal battery may not include a separation membrane or an electrolyte. The solid electrolyte layer may substantially function as a separation membrane and may prevent a short circuit between the cathode 100 and the electrode 130 for a lithium metal battery. In addition, the solid electrolyte layer allows lithium ions to migrate between the cathode 100 and the electrode 130 for a lithium metal battery.

In one embodiment, the sulfide-based electrolyte may be an LPS-based solid electrolyte including Li, P and S, an LGPS-based solid electrolyte including Li, P, Ge and S, or an LSiPSCl-based solid electrolyte including Li, Si, P, S and Cl.

For example, as the sulfide-based electrolyte, Li₂S-P₂S₅, Li₁₀GeP₂S₁₂, Li₁₀SnP₂S₁₂, Li_{9.54}Si_{1.74}P_{1.44}S_{11.7}Cl_{0.3}, Li₁₀(Si_{0.5}Ge_{0.5})P₂S₁₂, Li₁₀(Ge_{0.5}Sn_{0.5})P₂S₁₂, Li₁₀(Si_{0.5}Sn_{0.5})P₂S₁₂, Li₁₀GeP₂S_{11.7}O_{0.3}, Li_{9.6}P₃S₁₂, Li₉P₃S₉O₃, Li_{0.35}Ge_{1.35}P_{1.65}S₁₂, Li_{10.35}Si_{1.35}P_{1.65}S₁₂, Li_{9.81}Sn_{0.81}P_{2.19}S₁₂, Li_{9.42}Si_{1.02}P_{2.1}S_{9.96}O_{2.04}, Li₆PS₅Cl, etc. may be used.

In one embodiment, the oxide-based electrolyte may include an ion-conductive compound containing a metal oxide or oxygen.

Examples of the metal oxide may include Al₂O₃, ZnO₂, Ce₂O₃, TiO₂, ZrO₂, HfO₂, MnO₂, MgO, WO₂, V₂O₅, etc.

Examples of the ion-conductive compound may include garnet compounds such as LLZO compounds (e.g., Li₇La₃Zr₂O₁₂); perovskite compounds such as LLTO compounds (e.g., Li₃ₓLa_{2/3-x}TiO₃, 0<x<3); NASICON compounds such as Li₁₊ₓAlₓGe₂₋ₓ(PO₄)₃(0<x<2), Li₁₊ₓAlₓTi₂₋ₓ(PO₄)₃(0<x<2), Li₁₊ₓTi_{2-x-y}AlₓSi_{y}(PO₄)_{3-y}(0≤x≤1, 0<y≤1), LAGP compounds, LATP compounds, LiAlₓZr₂₋ₓ(PO₄)₃(0≤x≤1, 0≤y≤1), LiTiₓZr₂₋ₓ(PO₄)₃(0≤x≤1, 0≤y≤1); LIPON compounds; Li₆La₂CaTa₂O₁₂; Li₆La₂ANb₂O₁₂ (where A is Ca or Sr); Li₂Nd₃TeSbO₁₂, Li₃BO_{2.5}N_{0.5}; Li₉SiAlO₈, etc.

The polymer electrolyte may include a polyether polymer such as poly(ethylene oxide) or poly(propylene oxide), a polycarbonate polymer such as poly(ethylene carbonate), poly(propylene carbonate), or poly(trimethylene carbonate), or a polyester polymer such as poly(ε-caprolactone) or poly(1,4-butylene adipate).

As illustrated in FIG. 4, electrode tabs (cathode tabs and anode tabs) may be formed from the cathode current collector 105 and the anode current collector 125, each belonging to a respective electrode cell, and may extend to one side of the case 160. The electrode tabs may be welded together with the one side of the case 160 to form electrode leads (a cathode lead 107 and an anode lead 127) that extend from or are exposed to the outside of the case 160.

The lithium secondary battery may be manufactured, for example, in a cylindrical shape using a can, a prismatic shape, a pouch shape or a coin shape.

Hereinafter, embodiments of the present disclosure will be further described with reference to specific experimental examples. However, the following examples and comparative examples included in the experimental examples are only given for illustrating the present disclosure and those skilled in the art will obviously understand that various alterations and modifications are possible within the scope and spirit of the present disclosure. Such alterations and modifications are duly included in the appended claims.

### Example 1

### (1) Preparation of silicon oxide particles

8 g of diatomaceous earth (Diatomite, SiO₂, flux-calcined, Merck) classified with a particle size of 10 µm or less, and 1 g of magnesium powder (Mg>99%, Merck) were mixed in a mortar and pestle within a glove box. The mixed powder was placed in a stainless steel sealed reactor with an inner volume of 20 ml and then sealed. The mixed powder was heat-treated at 675°C for 2 hours in a synthesis furnace under an Ar atmosphere, and the heat-treated powder was stirred in 1 L of 1 M HCl for 24 hours. The powder was washed with distilled water in a pressure-reducing filter until it became neutral. The washed powder was dried in a convection oven at 80°C for 24 hours, and then dried in a vacuum oven at 80°C for 24 hours to obtain silicon oxide particles.

The composition of the silicon oxide particles was then measured using X-ray photoelectron spectroscopy (XPS) analysis with a photoelectron spectrometer (Sigma probe, Thermo Scientific). The measured composition of the silicon oxide particles was SiO_{1.6}.

### (2) Porosity evaluation

Scanning electron microscope (SEM) images of the diatomaceous earth powder were captured using a scanning electron microscope (JSM-7000F, JEOL). SEM images of the silicon oxide particles prepared using the diatomaceous earth were then captured using a scanning electron microscope.

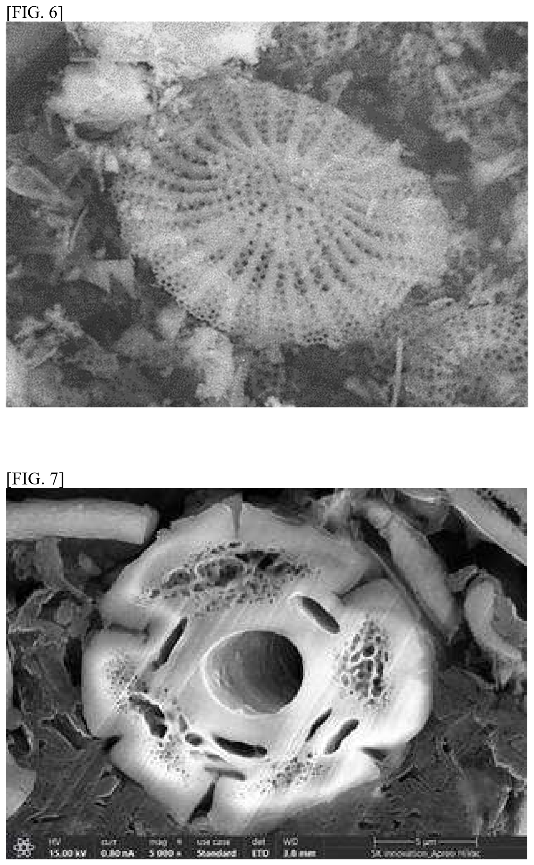

FIG. 6 is an SEM image of the diatomaceous earth powder. FIG. 7 is a cross-sectional SEM image of the silicon oxide particles.

Referring to FIGS. 6 and 7, it can be confirmed that pores were formed on the surface and inside the silicon oxide particles when the porous diatomaceous earth with a porous structure was used to prepare the silicon oxide particles.

### (3) Porosity measurement

The volume of pores formed within the silicon oxide particles was measured by the mercury intrusion porosimetry (MIP) method using a mercury intrusion device (AUTOPORE V, Micromeritics). The porosity of the silicon oxide particles was calculated as a percentage of the measured pore volume divided by the volume of the silicon oxide particles.

### (4) Fabrication of electrode for a lithium metal battery

The silicon oxide particles (SiO_{1.6}), conductive material (Super-P, Timcal), and binder (PVDF, KF-9700, Kureha) were mixed in a weight ratio of 9.0:0.5:0.5. N-Methyl-2-pyrrolidone (NMP, Merck) was added to achieve a solid content of 35%, and the mixture was mixed using a mixer (ar-100, Thinky Mixer) to prepare a slurry.

The slurry was coated on a copper foil having a thickness of 8 µm using a doctor blade. The coating was controlled such that the thickness of the electrode after final drying was 53 µm before rolling.

The slurry-coated copper foil was dried in a convection oven at 80°C for 24 hours and then in a vacuum oven at 80°C for 24 hours to fabricate an electrode for a lithium metal battery.

The pore volume of the lithium metal storage layer was measured by the MIP method using the same mercury intrusion device (AUTOPORE V, Micromeritics). The porosity of the lithium metal storage layer was calculated as the percentage obtained by dividing the measured pore volume by the volume of the lithium metal storage layer.

### (5) Manufacture of coin cell

A coin cell was manufactured using the fabricated electrode for a lithium metal battery and lithium metal as a counter electrode.

Specifically, the electrode and counter electrode were each notched into a circular shape, and a circular polyethylene separation membrane (thickness: 13 µm) was interposed between the electrode and counter electrode to fabricate an electrode assembly.

The electrode assembly was placed in a coin-shaped case, and an electrolyte was injected to manufacture a coin-shaped lithium secondary battery. A 1M LiPF₆ solution prepared using a mixed solvent of EC/EMC (30/70; volume ratio) was used as the electrolyte.

### (6) Potential measurement

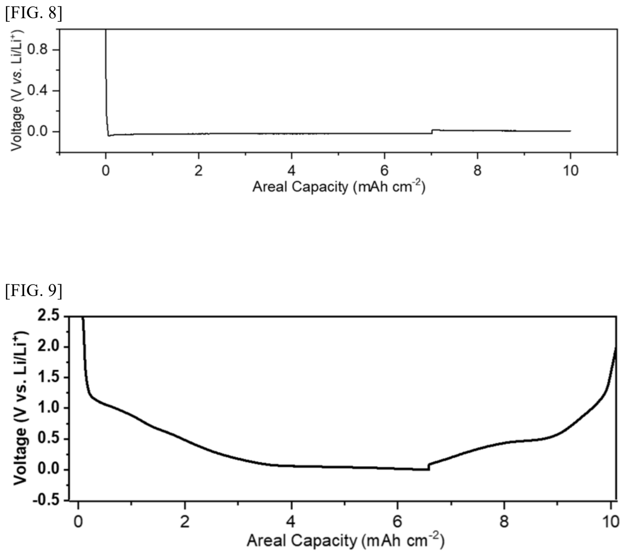

The manufactured cell was initially charged and discharged at a C-rate of 0.2C within the voltage range of 2.5 V to 4.2 V. Subsequently, charge and discharge were performed at a C-rate of 0.5C within the voltage range of 2.5 V to 4.2 V, and the voltage changes during charging and discharging were measured. The measured results are shown in FIG. 8 below.

An electrode for a lithium metal battery and coin cell were manufactured in the same manner, except that silicon monoxide (SiO) was used instead of the silicon oxide particles prepared in (1) above. Charge and discharge were then performed in the same manner, and the voltage changes during charging and discharging were measured. The measured results are shown in FIG. 9 below.

Referring to FIG. 8, when an electrode for a lithium metal battery was fabricated using the above-described silicon oxide particles, the voltage during charging was 0 V or less relative to the redox voltage of lithium, and the voltage during discharging was 0.2 V or less. Therefore, it can be seen that the voltage does not increase during the charge and discharge process, and lithium metal is stably deposited and stripped. Thus, it can be confirmed that the capacity of the battery is expressed by lithium metal deposition and stripping, rather than by the oxidation and reduction reactions of silicon oxide.

Referring to FIG. 9, when an electrode for a lithium metal battery was fabricated using silicon monoxide (SiO), the potential changed significantly during charging and discharging. Therefore, it can be confirmed that the capacity of the battery is expressed as silicon oxide reacting with lithium ions during charging and being reduced back to silicon monoxide during discharging.

### Examples 2 and 3

Electrodes for a lithium metal battery and coin cells were manufactured in the same manner as in Example 1, except that the porosity of the silicon oxide particles and lithium metal storage layer was changed as shown in Table 1.

The porosity of the silicon oxide particles was controlled by varying the porosity of the diatomaceous earth, the heat treatment time, the amount of magnesium powder mixed, and the acid washing time. The porosity of the lithium metal storage layer was controlled by varying the solid content of the slurry, drying time, and other factors.

### Comparative Example 1

Silicon oxide particles (SiO_{1.6}) were prepared in the same manner as in Example 1, except that non-porous diatomaceous earth was used. The silicon oxide particles had a non-porous structure. Subsequently, an electrode for a lithium metal battery and a coin cell were manufactured in the same manner as in Example 1.

### Comparative Example 2

A coin cell was manufactured in the same manner as in Example 1, except that only copper foil, without forming the lithium metal storage layer, was used as the electrode for a lithium metal battery.

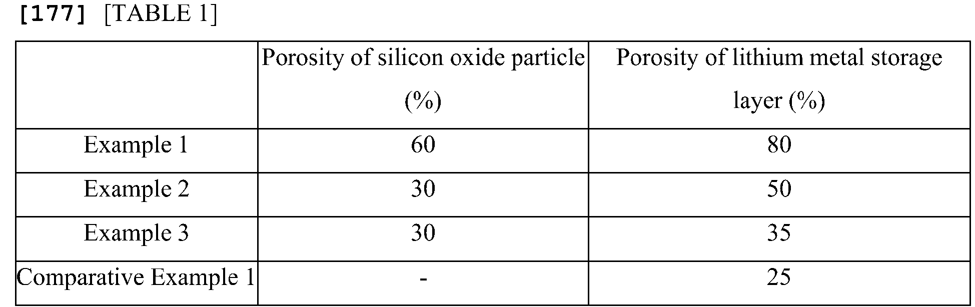

### Experimental Example 1: Measurement of volume change rate

The initial volume of the electrode for a lithium metal battery fabricated above was measured.

Thereafter, the volume of the electrode for a lithium metal battery was measured at each charge-discharge cycle while increasing the charge and discharge capacities to 1mAh/cm², 3mAh/cm², 4mAh/cm², and 7 mAh/cm² at room temperature. The measured volume change rate was calculated as the percentage of the initial volume.

The measurement results are shown in Table 2 below.

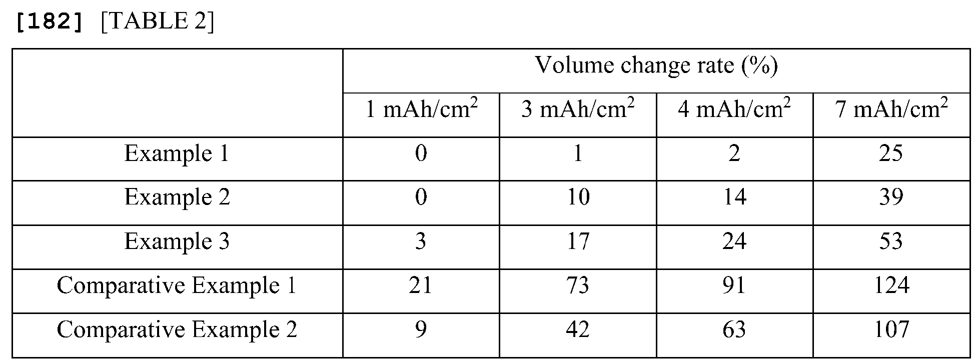

### Experimental Example 2: Measurement of capacity retention

The manufactured coin cell was charged (CC-CV 0.2C, 4.2 V cut-off) and discharged (CC 0.2C, 2.5 V cut-off) at room temperature, and the discharge capacity was measured for each cycle.

The capacity retention of the manufactured coin cell was evaluated by calculating the ratio of the discharge capacity at each cycle to the initial discharge capacity as a percentage. If the capacity retention is less than 10%, it is indicated as "-" in Table 3.

The measurement results are shown in Table 3 below.

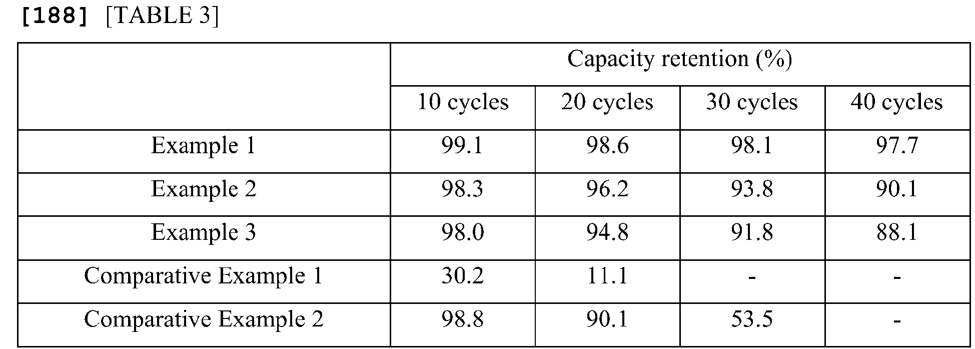

Referring to Tables 2 and 3, the coin cells of the examples exhibited minimal volume change in the electrodes even after repeated charge-discharge cycles, and maintained their charge and discharge capacities for a long period of time.

However, the electrode of Comparative Example 1, which used silicon oxide particles having a non-porous structure, showed a large increase in volume and a decrease in capacity retention. In addition, the electrode of Comparative Example 2, which used only a copper current collector as the electrode for a lithium metal battery, showed a large increase in volume even in the initial cycles, and the capacity rapidly decreased after 20 cycles due to the continuous accumulation of inactive lithium during charging and discharging.

## Claims

1. An electrode for a lithium metal battery comprising a lithium metal storage layer comprising silicon oxide particles having a porous structure,
wherein the molar ratio of oxygen to silicon in the silicon oxide particles is 1.5 or more and less than 2.0.

2. The electrode for a lithium metal battery according to claim 1, wherein the silicon oxide particles are SiOₓ, and 1.5≤x<2.

3. The electrode for a lithium metal battery according to claim 1, wherein the porosity of each of the silicon oxide particles is 10% to 90%.

4. The electrode for a lithium metal battery according to claim 1, wherein the porosity of the lithium metal storage layer is 40% to 95%.

5. The electrode for a lithium metal battery according to claim 1, wherein pores formed within the silicon oxide particles have a size of 10 nm to 1 µm.

6. The electrode for a lithium metal battery according to claim 1, wherein pores formed within the lithium metal storage layer have a size of 10 nm to 10 µm.

7. The electrode for a lithium metal battery according to claim 1, wherein the maximum voltage of the lithium metal storage layer measured during a charge process after initial charge and discharge (formation) is 0 V or less relative to the redox voltage of lithium.

8. The electrode for a lithium metal battery according to claim 1, further comprising an electrode current collector,
wherein the lithium metal storage layer is disposed on at least one surface of the electrode current collector.

9. The electrode for a lithium metal battery according to claim 1, wherein the silicon oxide particles comprise lithium silicate.

10. The electrode for a lithium metal battery according to claim 9, wherein, at a SOC of 100%, the molar ratio of lithium present as lithium silicate within the lithium metal storage layer to lithium deposited as lithium metal within the lithium metal storage layer is 0.9 or more.

11. The electrode for a lithium metal battery according to claim 9, wherein the molar ratio of lithium included in the lithium metal storage layer at a SOC of 0% to lithium included in the lithium metal storage layer at a SOC of 100% is 2.2 or less.

12. A lithium metal battery comprising the electrode for a lithium metal battery according to claim 1.

13. A method for manufacturing silicon oxide particles for a lithium metal battery, comprising:
forming a mixture by mixing a silicon precursor having a porous structure with an alkaline earth metal or a carbon compound;
heat-treating the mixture; and
washing the heat-treated mixture to obtain silicon oxide particles;
wherein the molar ratio of oxygen to silicon in the silicon oxide particles is 1.5 or more and less than 2.0.

14. The method for manufacturing silicon oxide particles for a lithium metal battery according to claim 13, further comprising mixing the heat-treated mixture with an acid prior to washing the heat-treated mixture.

15. The method for manufacturing silicon oxide particles for a lithium metal battery according to claim 13, wherein the silicon precursor is SiO₂.

16. The method for manufacturing silicon oxide particles for a lithium metal battery according to claim 13, wherein the alkaline earth metal is magnesium (Mg).
